# EUROPÄISCHE PATENTSCHRIFT

(11) **EP 4 473 230 B1**
(45) Veröffentlichungstag und Bekanntmachung des Hinweises auf die Patenterteilung: **18.11.2026**
(21) Anmeldenummer: 23703157.0
(22) Anmeldetag: 01.02.2023
(51) Int. Cl.: F16H 57/10, F16H 57/028, F16H 57/03, F16H 55/17, F16H 63/34, F16D 41/30, F16D 41/12, B62M 11/14, B62M 11/18

(54) **TRETLAGERGETRIEBE**
BOTTOM-BRACKET GEAR
ENGRENAGE DE PÉDALIER

(30) Priorität: 03.02.2022 DE 102022201131
(43) Veröffentlichungstag der Anmeldung: 11.12.2024
(73) Patentinhaber: ZF Friedrichshafen AG, 88046 Friedrichshafen (DE)
(72) Erfinder: RIEDISSER, Thomas, 88138 Sigmarszell (DE); DOERR, Ulrich, 78467 Konstanz (DE); ZIEMER, Peter, 86825 Bad Woerishofen (DE); DEBERNITZ, Leschek, 88097 Eriskirch (DE); MARGRAF, Christoph, 88677 Markdorf (DE); DOEPFERT, Hagen, 88131 Lindau (DE); SCHRAFF, Uwe, 88677 Markdorf (DE); GRIESMEIER, Uwe, 88677 Markdorf (DE); WIEMER, Michel, 88250 Weingarten (DE); STROBEL, Markus, 88214 Ravensburg (DE)
(74) Vertreter: ZF Friedrichshafen AG
(86) Internationale Anmeldenummer: PCT/EP2023/052373
(87) Internationale Veröffentlichungsnummer: WO 2023/148184

(56) Entgegenhaltungen:
- WO-A1-2019/228725
- DE-A1- 102019 220 043
- DE-A1- 102019 220 044

## Beschreibung

Die vorliegende Erfindung betrifft ein Tretlagergetriebe mit zumindest einer Anordnung zum Betätigen eines Schaltelements des Tretlagergetriebes mit einem einem Getriebebauteil zugeordneten drehbar in einem Tretlagergetriebe-Gehäuse gelagerten Schaltring, wobei dem Schaltring eine Schaltklinke zum Sperren oder Freigeben des Schaltrings zum Schalten einer Übersetzungsstufe zugeordnet ist. Ferner betrifft die Erfindung ein Fahrrad oder Pedelec mit dem Tretlagergetriebe.

Beispielsweise aus der Druckschrift DE 10 2019 220 044 A1 ist ein Tretlagergetriebe in Planetenradsatzbauweise für ein Fahrrad oder ein Pedelec mit einer Anordnung zum Betätigen zumindest eines Bremsschaltelements bekannt. Das Tretlagergetriebe weist mehrere Planetenradsätze zum Realisieren verschiedener Übersetzungsstufen auf. Dem Tretlagergetriebe sind mehrere Bremsschaltelemente zugeordnet, die jeweils einen einem Getriebebauteil zugeordneten Bremsring aufweisen, der über eine Bremsklinke gesperrt oder freigegeben werden kann, um eine vorbestimmte zugeordnete Übersetzungsstufe zu schalten. Die Bremsringe der Bremsschaltelemente sind jeweils in dem Gehäuse des Tretlagergetriebes drehbar gelagert. Jede einem Bremsring zugeordnete Bremsklinke wird durch eine drehbar gelagerte Schaltwalze betätigt, die etwa achsparallel zu einer zentralen Rotationsachse des Tretlagergetriebes angeordnet ist. Zum Sperren des Bremsrings wird die Bremsklinke mit einer Außenverzahnung des Bremsrings in Eingriff gebracht. Hierbei entstehen entsprechende Reaktionskräfte an der Bremsklinke und an dem Bremsring.

WO 2019 / 228 724 A1 beschreibt ein Mehrstufengetriebe in Planetenbauweise für ein Fahrrad oder ein Pedelec mit einer Getriebeeingangswelle als Antrieb und einer Getriebeausgangswelle als Abtrieb und mit zumindest vier Planetenradsätzen, wobei zumindest vier Freilaufkupplungen und zumindest vier Bremsen zum Realisieren von zumindest sechzehn Gängen vorgesehen sind.

DE 10 2019 220 043 A1 beschreibt ein Tretlagergetriebe in Planetenradsatzbauweise für ein Fahrrad oder ein Pedelec mit einer Anordnung zum Betätigen zumindest eines Bremsschaltelementes, wobei zumindest eine drehbar gelagerte Schaltwalze in Wirkverbindung mit zumindest einer als Bremsschaltelement ausgeführten Bremsklinke zum Sperren und Freigeben eines zugeordneten Bremsringes steht, wobei der Bremsring mit einem zugeordneten Getriebebauteil zum Schalten einer Gangstufe mit einem vorbestimmten Radialspiel drehfest verbunden ist.

Der vorliegenden Erfindung liegt die Aufgabe zugrunde, ein Tretlagergetriebe mit zumindest einer Anordnung zum Betätigen eines Schaltelements sowie ein Fahrrad oder Pedelec vorzuschlagen, bei denen konstruktiv einfach und kostengünstig eine ausreichende Abstützung von Reaktionskräften im gesperrten Zustand eines Schaltrings an dem Tretlagergetriebe-Gehäuse gewährleistet wird.

Diese Aufgabe wird erfindungsgemäß durch die Gegenstände mit den Merkmalen der unabhängigen Patentansprüche 1, 2 und 4 gelöst. Vorteilhafte und beanspruchte Weiterbildungen ergeben sich aus den Unteransprüchen und der Beschreibung sowie den Zeichnungen.

Es wird ein Tretlagergetriebe mit zumindest einer Anordnung zum Betätigen eines einen Schaltring aufweisenden Schaltelementes des Tretlagergetriebes vorgeschlagen, aufweisend ein Tretlagergetriebe-Gehäuse und einen einem Getriebebauteil zugeordneten drehbar in dem Tretlagergetriebe-Gehäuse gelagerten Schaltring, wobei dem Schaltring eine Schaltklinke zum Sperren oder Freigeben des Schaltringes zum Schalten einer Übersetzungsstufe zugeordnet ist. Das Schaltelement weist den Schaltring auf.

Um die im gesperrten Zustand des Schaltrings auftretenden Reaktionskräfte gehäuseseitig kostengünstig und konstruktiv einfach abstützen zu können, ist vorgesehen, dass zumindest entlang eines möglichen Kontaktbereiches zwischen einer Innenwand des Tretlagergetriebe-Gehäuses und einem Außenumfang des Schaltrings aufgrund von beim Sperren des Schaltrings wirkender Reaktionskräfte ein das Tretlagergetriebe-Gehäuse mechanisch verstärkender Abstützbereich zum gehäuseseitigen Abstützen der Reaktionskräfte vorgesehen ist.

Auf diese Weise wird bei der vorgeschlagenen Anordnung eine mechanische Verstärkung des Tretlagergetriebe-Gehäuses zumindest im Bereich der wirkenden Reaktionskraft vorgesehen. Dadurch kann das Tretlagergetriebe-Gehäuse beispielsweise gewichtssparend z. B. aus Aluminium gefertigt werden, da der Abstützbereich die notwendige mechanische Stabilität an dem Tretlagergetriebe-Gehäuse sicherstellt. Somit kann nicht nur die Lebensdauer der Anordnung verlängert, sondern auch Kosten eingespart werden.

Um bei entsprechenden Kontakten des Bremsrings an der Innenwand des Tretlagergetriebe-Gehäuses keine unerwünschten akustischen Geräusche zu verursachen, kann im Rahmen der vorliegenden Erfindung vorgesehen sein, dass der Abstützbereich mit einem hinsichtlich der Akustik wirkenden Dämpfungsbereich versehen wird. Dies kann beispielsweise ein separates Dämpfungselement oder auch eine geeignete Beschichtung sein.

Besonders bevorzugt für die akustische Dämpfung ist im Rahmen der Erfindung die Verwendung eines auf den Abstützbereich beispielsweise aufvulkanisierten Elastomers oder dergleichen. Hierdurch wird die Weiterleitung von akustischen Schallwellen in das Tretlagergetriebe-Gehäuse ausreichend gedämpft. Darüber hinaus ist das Aufvulkanisieren eines Elastomers besonders kostengünstig und einfach auszuführen.

Die konkrete konstruktive Ausführung des Abstützbereichs ist auf verschiedene Arten möglich. In einem Aspekt der vorliegenden Erfindung ist als Abstützbereich eine über den Innenumfang des Tretlagergetriebe-Gehäuses im Bereich des Bremsringes geschlossene Hülse vorgesehen, die an der Innenwand des Tretlagergetriebe-Gehäuses befestigt ist.

Auf diese Weise wird neben der radialen Abstützung auch eine radiale Führung der Schaltrings in dem Tretlagergetriebe-Gehäuse realisiert, da quasi die Hülse als Stütz- bzw. Gleitelement über den gesamten Umfang ausgeführt ist und mit dem Tretlagergetriebe-Gehäuse befestigt ist.

Somit erfolgt eine radiale Zentrierung und Abstützung von dem außenliegenden Schaltring in dem Tretlagergetriebe-Gehäuse über den zum Beispiel als Hülse ausgeführten Abstützbereich.

Zum Befestigen des als Hülse ausgeführten Abstützbereiches kann beispielsweise bei der vorgeschlagenen Anordnung vorgesehen sein, dass die Hülse in das Tretlagergetriebe-Gehäuse eingepresst oder thermisch eingefügt wird, um die Hülse direkt in dem Tretlagergetriebe-Gehäuse spielfrei zu befestigen.

In einem weiteren Aspekt der vorliegenden Erfindung ist als Abstützbereich eine an der Innenwand des Tretlagergetriebe-Gehäuses vorgesehene die Oberflächenhärte steigernde Beschichtung vorgesehen. Eine derartige Beschichtung könnte beispielsweise durch Hartanodisierung hergestellt werden und somit auf die gesamte Innenwand oder nur auf den Kontaktbereich der Innenwand des Tretlagergetriebe-Gehäuses aufgebracht werden. Als eine kostengünstige und konstruktiv einfache Ausführung ist in einem weiteren Aspekt der vorliegenden Erfindung als Abstützbereich ein ringsegmentförmiges Einschiebeelement vorgesehen.

Durch die Ausführung als Ringsegment ist genau der durch die Reaktionskraft beaufschlagte Bereich an der Innenwand des Tretlagergetriebe-Gehäuses mechanisch ausreichend verstärkt, sodass andere Teile des Tretlagergetriebe-Gehäuses beispielsweise aus gewichtssparendem Aluminium oder dergleichen hergestellt werden können.

Vorzugsweise kann der hinsichtlich der Akustik wirkende Dämpfungsbereich zwischen dem Einschiebeelement und der Innenwand des Tretlagergetriebe-Gehäuses vorgesehen sein.

Besonders vorteilhaft ist es, wenn das ringsegmentförmige Einschiebeteil aus gehärtetem Federstahl oder anderem elastischen Material quasi als Federspange ausgeführt wird. Aufgrund der elastischen Eigenschaft des Einschiebeelements kann die Krümmung des Einschiebeelements beim Befestigen in dem Tretlagergetriebe-Gehäuse an den Radius der Innenwand des Tretlagergetriebe-Gehäuses optimal angepasst werden.

Vorzugsweise können die Abmessungen des ringsegmentförmigen Einschiebeelements derart gewählt werden, dass zumindest der etwa in einem Winkel von 90° entfernt von einem Berührungsbereich zwischen der eingelegten Schaltklinke und der Außenverzahnung des Schaltrings liegende Kontaktbereich zwischen der Außenverzahnung des Schaltrings und der Innenwand des Tretlagergetriebe-Gehäuses ausreichend abgedeckt ist. Hierdurch können die Abmessungen optimal gewählt werden, sodass eine optimierte Abstützung bei der vorgeschlagenen Anordnung realisiert wird.

Zur Befestigung des vorgesehenen Einschiebeelements kann im Rahmen der Erfindung für eine besonders kostengünstige Ausführung vorgesehen sein, dass beispielsweise Endabschnitte des ringsegmentförmigen Einschiebeelements einfach abgewinkelt sind und in korrespondierenden Haltenuten oder dergleichen an der Innenwand des Tretlagergetriebe-Gehäuses befestigbar sind. Auf diese Weise wird eine sichere beispielsweise reibschlüssige und/oder formschlüssige Befestigung des Einschiebeelements an dem Tretlagergetriebe-Gehäuse ohne zusätzliche Befestigungsmittel realisiert.

Um bei der vorgeschlagenen Anordnung eine vorteilhafte Vorspannung an dem Einschiebeelement im eingebauten Zustand in dem Tretlagergetriebe-Gehäuse zu realisieren, ist vorgesehen, dass die Haltenuten in einem vorbestimmten Keilwinkel zum Innenradius des Tretlagergetriebe-Gehäuses ausgeführt sind, sodass das befestigte Einschiebeelement zwischen seinen Endabschnitten in den Haltenuten vorgespannt gehalten ist. Somit wird das Einschiebeelement durch das Vorspannen bzw. Verkeilen gekrümmt und folglich an die Innenwand des Tretlagergetriebe-Gehäuses angepresst.

Besonders bevorzugt wird bei der vorgeschlagenen Anordnung als Schaltelement ein Bremsschaltelement mit einem drehbar gelagerten Bremsring als Schaltring eingesetzt, der über eine vorzugsweise einzelne Bremsklinke als Schaltklinke in einer Drehrichtung sperrbar ist.

Das Tretlagergetriebe kann vorzugsweise in Planetenradsatzbauweise ausgeführt sein und somit mehrere Planetenradsätze umfassen, wobei vorbestimmte Getriebebauteile des Tretlagergetriebes den vorgesehenen Schalt- beziehungsweise Bremsringen zugeordnet sind, um entsprechende Übersetzungsstufen bei dem Tretlagergetriebe schalten zu können.

Ein nächster Aspekt der vorliegenden Erfindung beansprucht auch ein Fahrrad oder Pedelec, wie definiert in Anspruch 13.

Somit ergeben sich die bereits beschriebenen und weitere Vorteile.

Nachfolgend wird die vorliegende Erfindung anhand der Zeichnungen weiter erläutert.

Es zeigen:
Figur 1 eine schematische Schnittansicht einer erfindungsgemäßen Anordnung in einem Tretlagergetriebe eines Fahrrades oder Pedelecs;
Figur 2 eine schematische Schnittansicht der Anordnung mit einem Einschiebeelement als Abstützbereich an einer Innenwand des Tretlagergetriebe-Gehäuses;
Figur 3 eine schematische Teilansicht gemäß Figur 2 der Anordnung mit einer alternativen Ausführung einer Befestigung des Einschiebeelements an dem Tretlagergetriebe-Gehäuse; und
Figur 4 eine schematische Teilansicht gemäß Figur 2 der Anordnung mit einer weiteren alternativen Ausführung der Befestigung des Einschiebeelements an dem Tretlagergetriebe-Gehäuse.

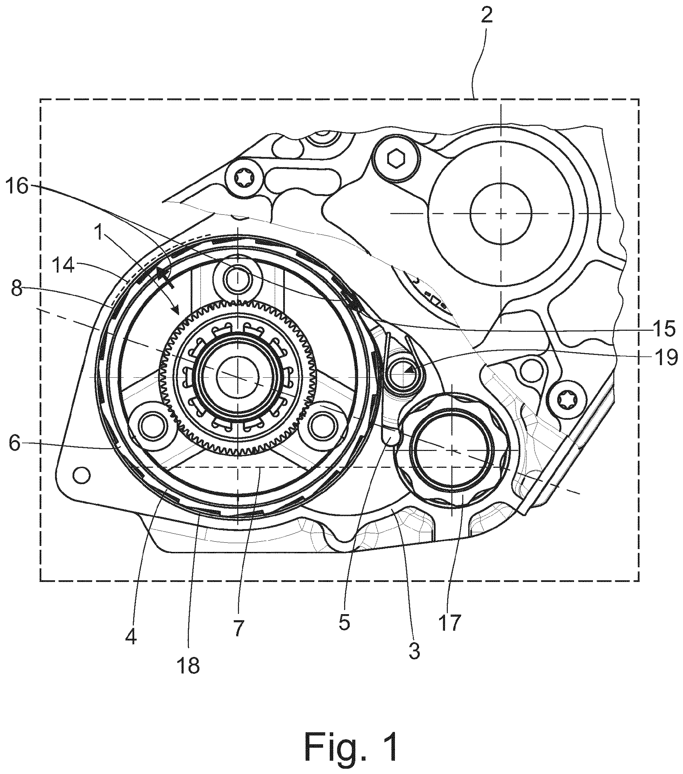

In den Figuren 1 bis 4 sind verschiedene Ansichten einer erfindungsgemäßen Anordnung in einem Tretlagergetriebe 1 eines Fahrrades oder Pedelecs 2 beispielhaft dargestellt. Aus dem Teilschnitt ist ersichtlich, dass in einem Tretlagergetriebe-Gehäuse 3 bzw. Tretlagergehäuse des Fahrrades oder Pedelecs 2 das Tretlagergetriebe 1 in Planetenradsatzbauweise angeordnet ist. Die Anordnung dient zum Betätigen eines beispielhaft dargestellten Bremsschaltelements als Schaltelement des Tretlagergetriebes 1.

Das Schaltelement bzw. Bremsschaltelement weist ein drehbar in dem Tretlagergetriebe-Gehäuse 3 gelagerten Bremsring 4 als Schaltring auf. Der Bremsring 4 wird über eine vorzugsweise einzelne Bremsklinke 5 als Schaltklinke in einer Drehrichtung gesperrt oder in beide Drehrichtungen freigegeben. Die über einen Bolzen 19 drehbar in dem Tretlagergetriebe-Gehäuse 3 gelagerte Schaltklinke wird durch eine drehbar in dem Tretlagergetriebe-Gehäuse 3 gelagerte Schaltwalze 17 betätigt. In dem gesperrten Zustand des Bremsrings 4, in dem die Bremsklinke 5 in eine Außenverzahnung 6 des Bremsrings 4 eingreift, wird eine vorbestimmte Übersetzungsstufe in dem Tretlagergetriebe 1 geschaltet. Die radiale Führung und Abstützung des Bremsrings 4 erfolgt in dem Tretlagergetriebe-Gehäuse 3 schwimmend über den Außenumfang des Bremsrings 4 und einem Innendurchmesser in dem Tretlagergetriebe-Gehäuse 3.

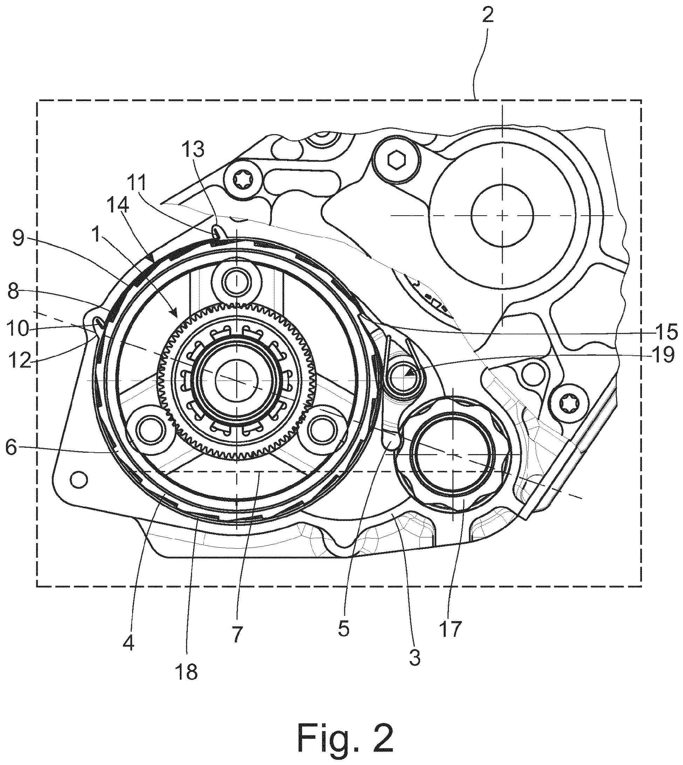

Wie insbesondere aus den Figuren 1 und 2 ersichtlich ist, befindet sich zumindest der untere Bereich des Bremsrings 4 direkt in einem Ölsumpf 7 aus vorzugsweise niederviskosem Leichtlauföl, wodurch der tribologische Kontaktbereich zwischen dem Bremsring 4 und einer Innenwand 8 des Tretlagergetriebe-Gehäuses 3 mit Öl versorgt wird.

Um den Verschleiß und die elastische bzw. plastische Nachgiebigkeit an der Innenwand 8 des Tretlagergetriebe-Gehäuses 3, welches vorzugsweise aus Aluminium gefertigt ist, zu reduzieren, ist vorgesehen, dass zumindest entlang eines Kontaktbereiches 14 zwischen der Innenwand 8 des Tretlagergetriebe-Gehäuses 3 und einem Außenumfang bzw. der Außenverzahnung 6 des Bremsrings 4 aufgrund einer beim Sperren des Bremsrings 4 wirkenden Reaktionskraft 16 ein das Tretlagergetriebe-Gehäuse 3 mechanisch verstärkender Abstützbereich vorgesehen ist. Der Kontaktbereich 14 bzw. der Abstützbereich ist in Figur 1 durch eine gestrichelte Linie am Umfangsbereich des Bremsrings 4 angedeutet.

Der angedeutete Kontaktbereich 14 ergibt sich aufgrund der wirkenden Reaktionskräfte 16 am Bremsring 4 und an der Bremsklinke 5, wenn die vorzugsweise einzelne Bremsklinke 5 in die Außenverzahnung 6 des Bremsrings 4 eingreift.

Der Kontaktbereich 14 liegt etwa in Umfangsrichtung um 90° von dem Berührungsbereich 15 zwischen der Außenverzahnung 6 des Bremsrings 4 und der eingelegten Bremsklinke 5 entfernt. Die einerseits an der Bremsklinke 5 und andererseits an der Innenwand 8 des Tretlagergetriebe-Gehäuses 3 wirkenden Reaktionskräfte 16 sind durch Pfeile in Figur 1 angedeutet. Die Reaktionskräfte an der Bremsklinke 5 werden über den Bolzen 19 ins Tretlagergetriebe-Gehäuse 3 geleitet.

Hieraus ist ersichtlich, dass die Reaktionskräfte 16 an dem Bremsring 4 beim Sperrkontakt durch Bremsklinken 5 zum Kräfteausgleich gegen das Tretlagergetriebe-Gehäuse 3 gedrückt werden und zwar gegenüberliegend zum Berührungsbereich 15 zwischen dem Bremsring 4 und der vorzugsweise einzelnen Bremsklinke 5. Dies bedeutet, dass sich der Bremsring 4 immer am identischen lokal begrenzten Ort an der Innenwand 8 des Tretlagergetriebe-Gehäuses 3 abstützt. Genau an diesem Kontaktbereich 14 wird der vorgeschlagene Abstützbereich an dem Tretlagergetriebe-Gehäuse 3 vorgesehen.

Als gehäuseseitiger den Verschleiß und die mechanische Härte des Tretlagergetriebe-Gehäuses 3 steigernder Abstützbereich ist eine geschlossen ausgeführte Hülse 18 koaxial oder um das mittlere Spiel zwischen Bremsring 4 und Innenwand 8 außermittig positioniert zum Bremsring 4 an der Gehäusewand 8 des Tretlagergetriebe-Gehäuses 3 vorgesehen. Die Hülse 18 ist in den Figuren 1 und 2 angedeutet. Die um das mittlere Spiel zwischen Bremsring 4 und Innenwand 8 außermittige Vorpositionierung der Hülse 18 hat den Vorteil, dass der Bremsring 4 beim Festsetzen durch die eingelegte Bremsklinke 5 mittig zur Drehachse des Tretlagergetriebes 1 liegt.

In den Figuren 2 bis 4 ist eine bevorzugte Ausführung des vorgesehenen Abstützbereiches in Form eines ringsegmentförmigen Einschiebeelements 9 quasi als Federspange oder dergleichen beispielhaft dargestellt.

Das Einschiebeelement 9 verläuft symmetrisch entlang des Kontaktbereiches 14 zwischen dem Bremsring 4 und der Innenwand 8 des Tretlagergetriebe-Gehäuses 3, wobei zum Befestigen des Einschiebeelements 9 dessen Endabschnitte 10, 11 entsprechend abgewickelt sind, um in zugeordneten Haltenuten 12, 13 direkt in dem Tretlagergetriebe-Gehäuse 3 befestigt zu werden. Vorzugsweise ist das Einschiebeelement 9 elastisch ausgeführt, sodass eine vorgespannte Verkeilung des Einschiebeelements 9 in den beiden Haltenuten 12, 13 realisiert werden kann. Das Einschiebeelements 9 verläuft somit entlang des Kontaktbereiches 14 und deckt diesen vollständig ab.

Es ist vorgesehen, dass das Einschiebeelement 9 bzw. die Federspange im nicht montierten Zustand eine speziell an den Einbauzustand angepasste Vorkrümmung aufweist, sodass diese dann im montierten und elastisch aufgebogenen Zustand sowohl die erforderliche Krümmung an die Innenwand 8 des Tretlagergetriebe-Gehäuses 3 als auch eine elastische Anfederung zu den Haltenuten 12,13 aufweist, um je nach Nutausführung reib- und/oder formschlüssig an dem Tretlagergetriebe-Gehäuse 3 gehalten zu werden.

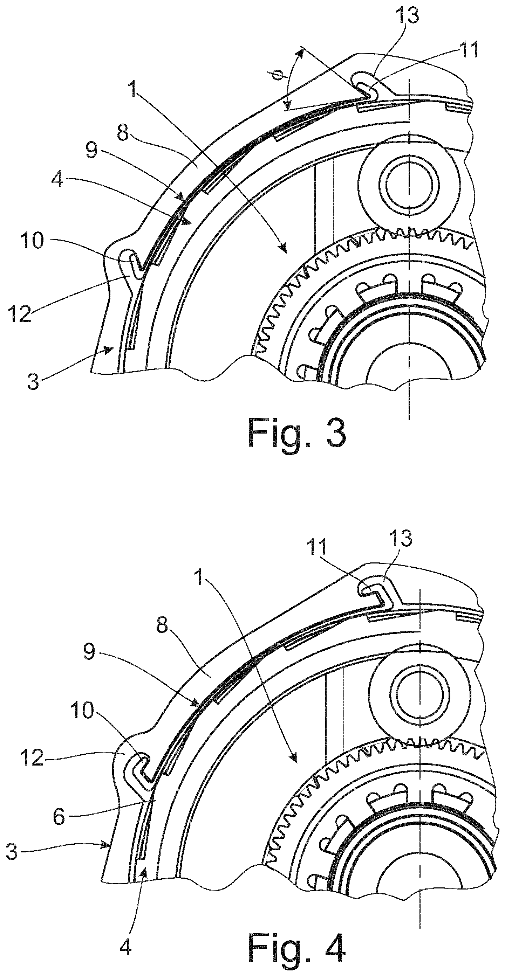

Wie sich insbesondere aus Figur 3 ergibt, werden die Haltenuten 12, 13 in einem vorbestimmten Keilwinkel ϕ zum Innenradius der Innenwand 8 des Tretlagergetriebe-Gehäuses 3 ausgeführt, sodass die in dem entsprechenden Winkel ϕ abgewinkelten Endabschnitte 10, 11 des Einschiebeelements 9 mit entsprechender Vorspannung gehalten sind.

In Figur 4 ist eine Ausführung gezeigt, bei der die Endabschnitte 10, 11 zweifach abgewinkelt sind und die Haltenuten 12,13 an die zweifach abgewinkelten Endabschnitte 10, 11 entsprechend angepasst sind, sodass neben der reibschlüssigen Befestigung zusätzlich eine formschlüssige Befestigung der Endabschnitte 10, 11 des Einschiebeelements 9 in den Haltenuten 12, 13 realisiert wird.

Unabhängig von der jeweiligen Ausführung der Haltenuten 12, 13 werden diese entweder im Gussverfahren in das Tretlagergetriebe-Gehäuse 3 eingebracht. Es ist auch denkbar, dass die Haltenuten 12, 13 durch eine spanabhebende Bearbeitung des Tretlagergetriebe-Gehäuses 3 hergestellt werden. Die Montage des Einschiebeelements 9 erfolgt entweder durch axiales Einschieben in die Haltenuten 12,13 des Tretlagergetriebe-Gehäuses 3 oder über Einschnappen von radial innen. Gegen seitliches Herauswandern wird das Einschiebeelement 9 über einen an das Tretlagergetriebe-Gehäuse 3 angeschraubten Deckel oder dergleichen gesichert.

Alternativ oder zusätzlich zu dem Einschiebeelement 9 als Abstützbereich kann auch dargestellte Hülse 18 oder auch eine Bohrung direkt in dem Tretlagergetriebe-Gehäuse 3 aus Aluminiumlegierung vorgesehen sein und die Innenfläche der Gehäusebohrung als oberflächlich härtegesteigerte über Hartanodisierung vorgesehene Beschichtung ausgeführt werden.

### Bezugszeichen

- 1: Tretlagergetriebe
- 2: Fahrrad oder Pedelec
- 3: Tretlagergetriebe-Gehäuse
- 4: Bremsring
- 5: Bremsklinke
- 6: Außenverzahnung
- 7: Ölsumpf
- 8: Innenwand des Tretlagergetriebe-Gehäuses
- 9: Einschiebeelement
- 10: Endabschnitt des Einschiebeelements
- 11: Endabschnitt des Einschiebeelements
- 12: Haltenut des Tretlagergetriebe-Gehäuses
- 13: Haltenut des Tretlagergetriebe-Gehäuses
- 14: Kontaktbereich zwischen Bremsring und Tretlagergetriebe-Gehäuse
- 15: Berührungsbereich zwischen Außenverzahnung und Bremsklinke
- 16: Reaktionskraft
- 17: Schaltwalze
- 18: Hülse
- 19: Bolzen
- Φ: Keilwinkel der Haltenut

## Patentansprüche

1. Tretlagergetriebe (1) mit zumindest einer Anordnung zum Betätigen eines einen Schaltring aufweisenden Schaltelementes des Tretlagergetriebes (1) aufweisend ein Tretlagergetriebe-Gehäuse (3) und den einem Getriebebauteil zugeordneten drehbar in dem Tretlagergetriebe-Gehäuse (3) gelagerten Schaltring, wobei dem Schaltring eine Schaltklinke zum Sperren oder Freigeben des Schaltringes zum Schalten einer Übersetzungsstufe zugeordnet ist und zumindest entlang eines Kontaktbereiches (14) zwischen einer Innenwand (8) des Tretlagergetriebe-Gehäuses (3) und einem Außenumfang des Schaltringes aufgrund von beim Sperren des Schaltringes wirkender Reaktionskräfte (16) ein das Tretlagergetriebe-Gehäuse (3) mechanisch verstärkender Abstützbereich zum gehäuseseitigen Abstützen der Reaktionskräfte (16) vorgesehen ist, **dadurch gekennzeichnet, dass** als Abstützbereich eine an der Innenwand (8) des Tretlagergetriebe-Gehäuses (3) vorgesehene die Oberflächenhärte steigernde Beschichtung vorgesehen ist.

2. Tretlagergetriebe (1) mit zumindest einer Anordnung zum Betätigen eines einen Schaltring aufweisenden Schaltelementes des Tretlagergetriebes (1) aufweisend ein Tretlagergetriebe-Gehäuse (3) und den einem Getriebebauteil zugeordneten drehbar in dem Tretlagergetriebe-Gehäuse (3) gelagerten Schaltring, wobei dem Schaltring eine Schaltklinke zum Sperren oder Freigeben des Schaltringes zum Schalten einer Übersetzungsstufe zugeordnet ist und zumindest entlang eines Kontaktbereiches (14) zwischen einer Innenwand (8) des Tretlagergetriebe-Gehäuses (3) und einem Außenumfang des Schaltringes aufgrund von beim Sperren des Schaltringes wirkender Reaktionskräfte (16) ein das Tretlagergetriebe-Gehäuse (3) mechanisch verstärkender Abstützbereich zum gehäuseseitigen Abstützen der Reaktionskräfte (16) vorgesehen ist, **dadurch gekennzeichnet, dass** als Abstützbereich eine über den Umfang geschlossene Hülse (18) vorgesehen ist, die an der Innenwand (8) des Tretlagergetriebe-Gehäuses (3) befestigt ist.

3. Tretlagergetriebe (1) nach Anspruch 2, **dadurch gekennzeichnet, dass** die Hülse (18) in das Tretlagergetriebe-Gehäuse (3) eingepresst oder thermisch eingefügt ist.

4. Tretlagergetriebe (1) mit zumindest einer Anordnung zum Betätigen eines einen Schaltring aufweisenden Schaltelementes des Tretlagergetriebes (1) aufweisend ein Tretlagergetriebe-Gehäuse (3) und den einem Getriebebauteil zugeordneten drehbar in dem Tretlagergetriebe-Gehäuse (3) gelagerten Schaltring, wobei dem Schaltring eine Schaltklinke zum Sperren oder Freigeben des Schaltringes zum Schalten einer Übersetzungsstufe zugeordnet ist und zumindest entlang eines Kontaktbereiches (14) zwischen einer Innenwand (8) des Tretlagergetriebe-Gehäuses (3) und einem Außenumfang des Schaltringes aufgrund von beim Sperren des Schaltringes wirkender Reaktionskräfte (16) ein das Tretlagergetriebe-Gehäuse (3) mechanisch verstärkender Abstützbereich zum gehäuseseitigen Abstützen der Reaktionskräfte (16) vorgesehen ist, **dadurch gekennzeichnet, dass** als Abstützbereich ein ringsegmentförmiges Einschiebeelement (9) vorgesehen ist.

5. Tretlagergetriebe (1) nach Anspruch 4, **dadurch gekennzeichnet, dass** das Einschiebeelement (9) aus gehärtetem Federstahl ausgeführt ist.

6. Tretlagergetriebe (1) nach einem der Ansprüche 2 bis5, **dadurch gekennzeichnet, dass** zwischen der Hülse (18) bzw. dem Einschiebeelement (9) und der Innenwand (8) des Tretlagergetriebe-Gehäuses (3) ein hinsichtlich der Akustik wirkender Dämpfungsbereich vorgesehen ist.

7. Tretlagergetriebe (1) nach Anspruch 6, **dadurch gekennzeichnet, dass** der Dämpfungsbereich zwischen der Hülse (18) bzw. dem Einschiebeelement (9) und der Innenwand (8) des Tretlagergetriebe-Gehäuses (3) als direkt auf das Abstützelement (1) bzw. auf das Einschiebeelement (9) aufvulkanisiertes Elastomer ausgeführt ist.

8. Tretlagergetriebe (1) nach einem der Ansprüche 2 bis 7, **dadurch gekennzeichnet, dass** die theoretische Mittelachse der Innenkontur der Hülse (18) bzw. des Einschiebeelements (9) koaxial oder um das mittlere Spiel zwischen Schaltring und Innenwand (8) des Tretlagergetriebe-Gehäuses (3) außermittig positioniert zum Schaltring liegt.

9. Tretlagergetriebe (1) nach einem der Ansprüche 4 bis 8, **dadurch gekennzeichnet, dass** die Abmessungen des ringsegmentförmigen Einschiebeelements (9) derart gewählt ist, dass zumindest der etwa in einem Winkel von 90° entfernt von einem Berührungsbereich (15) zwischen der eingelegten Schaltklinke und der Außenverzahnung (6) des Schaltringes auftretende Kontaktbereich (14) zwischen der Außenverzahnung (6) des Schaltrings und der Innenwand (8) des Tretlagergetriebe-Gehäuses (3) abgedeckt ist.

10. Tretlagergetriebe (1) nach Anspruch 9, **dadurch gekennzeichnet, dass** Endabschnitte (10, 11) des ringsegmentförmigen Einschiebeelements (9) abgewinkelt sind und in korrespondierenden Haltenuten (12, 13) an der Innenwand (8) des Tretlagergetriebe-Gehäuses (3) befestigbar sind.

11. Tretlagergetriebe (1) nach Anspruch 10, **dadurch gekennzeichnet, dass** die Haltenuten (12, 13) und die Endabschnitte (10, 11) des Einschiebeelements (9) in einem vorbestimmten Keilwinkel (Φ) zum Innenradius der Innenwand (8) des Tretlagergetriebe-Gehäuses (3) ausgeführt sind.

12. Tretlagergetriebe (1) nach einem der vorangehenden Ansprüche, **dadurch gekennzeichnet, dass** als Schaltelement ein Bremsschaltelement mit einem drehbar gelagerten Bremsring (4) als Schaltring vorgesehen ist, der über eine drehbar über einen Bolzen (19) gelagerte Bremsklinke (5) als Schaltklinke in einer Drehrichtung sperrbar ist.

13. Fahrrad oder Pedelec (2) mit einem Tretlagergetriebe (1) nach einem der Ansprüche 1 bis 12.

## Claims

1. Bottom-bracket transmission (1) with at least one arrangement for actuating a shift element, which has a shift ring, of the bottom-bracket transmission (1), having a bottom-bracket-transmission housing (3) and the shift ring, the latter being assigned to a transmission component and mounted rotatably in the bottom-bracket-transmission housing (3), wherein the shift ring is assigned a pawl for blocking or releasing the shift ring for shifting into a gear-ratio stage and, at least along a contact region (14) between an inner wall (8) of the bottom-bracket-transmission housing (3) and an outer circumference of the shift ring, owing to reaction forces (16) acting during the blocking of the shift ring, a support region, mechanically reinforcing the bottom-bracket-transmission housing (3), for supporting the reaction forces (16) at the housing side is provided, **characterized in that** a surface-hardness-increasing coating provided on the inner wall (8) of the bottom-bracket-transmission housing (3) is provided as the support region.

2. Bottom-bracket transmission (1) with at least one arrangement for actuating a shift element, which has a shift ring, of the bottom-bracket transmission (1), having a bottom-bracket-transmission housing (3) and the shift ring, the latter being assigned to a transmission component and mounted rotatably in the bottom-bracket-transmission housing (3), wherein the shift ring is assigned a pawl for blocking or releasing the shift ring for shifting into a gear-ratio stage and, at least along a contact region (14) between an inner wall (8) of the bottom-bracket-transmission housing (3) and an outer circumference of the shift ring, owing to reaction forces (16) acting during the blocking of the shift ring, a support region, mechanically reinforcing the bottom-bracket-transmission housing (3), for supporting the reaction forces (16) at the housing side is provided, **characterized in that** a sleeve (18) which is closed over the circumference and is fastened to the inner wall (8) of the bottom-bracket-transmission housing (3) is provided as the support region.

3. Bottom-bracket transmission (1) according to Claim 2, **characterized in that** the sleeve (18) is pressed or thermally inserted into the bottom-bracket-transmission housing (3).

4. Bottom-bracket transmission (1) with at least one arrangement for actuating a shift element, which has a shift ring, of the bottom-bracket transmission (1), having a bottom-bracket-transmission housing (3) and the shift ring, the latter being assigned to a transmission component and mounted rotatably in the bottom-bracket-transmission housing (3), wherein the shift ring is assigned a pawl for blocking or releasing the shift ring for shifting into a gear-ratio stage and, at least along a contact region (14) between an inner wall (8) of the bottom-bracket-transmission housing (3) and an outer circumference of the shift ring, owing to reaction forces (16) acting during the blocking of the shift ring, a support region, mechanically reinforcing the bottom-bracket-transmission housing (3), for supporting the reaction forces (16) at the housing side is provided, **characterized in that** a ring-segment-shaped push-in element (9) is provided as the support region.

5. Bottom-bracket transmission (1) according to Claim 4, **characterized in that** the push-in element (9) is formed from hardened spring steel.

6. Bottom-bracket transmission (1) according to one of Claims 2 to 5, **characterized in that** an acoustically effective damping region is provided between the sleeve (18) or the push-in element (9) and the inner wall (8) of the bottom-bracket-transmission housing (3).

7. Bottom-bracket transmission (1) according to Claim 6, **characterized in that** the damping region between the sleeve (18) or the push-in element (9) and the inner wall (8) of the bottom-bracket-transmission housing (3) is in the form of elastomer which is vulcanized directly onto the support element (1) or onto the push-in element (9).

8. Bottom-bracket transmission (1) according to one of Claims 2 to 7, **characterized in that** the theoretical central axis of the inner contour of the sleeve (18) or of the push-in element (9) is positioned coaxially, or eccentrically by the average clearance between the shift ring and the inner wall (8) of the bottom-bracket-transmission housing (3), with respect to the shift ring.

9. Bottom-bracket transmission (1) according to one of Claims 4 to 8, **characterized in that** the dimensions of the ring-segment-shaped push-in element (9) are selected in such a way that at least the contact region (14) between the outer toothing (6) of the shift ring and the inner wall (8) of the bottom-bracket-transmission housing (3), which contact region occurs approximately at an angle of 90° away from a touching region (15) between the inserted pawl and the outer toothing (6) of the shift ring, is covered.

10. Bottom-bracket transmission (1) according to Claim 9, **characterized in that** end portions (10, 11) of the ring-segment-shaped push-in element (9) are at an angle and are fastenable in corresponding retaining grooves (12, 13) on the inner wall (8) of the bottom-bracket-transmission housing (3).

11. Bottom-bracket transmission (1) according to Claim 10, **characterized in that** the retaining grooves (12, 13) and the end portions (10, 11) of the push-in element (9) are formed at a predetermined wedge angle (Φ) with respect to the inner radius of the inner wall (8) of the bottom-bracket-transmission housing (3).

12. Bottom-bracket transmission (1) according to one of the preceding claims, **characterized in that** a brake shift element with a rotatably mounted brake ring (4), as the shift ring, is provided as the shift element, said brake ring being blockable in one direction of rotation via a brake pawl (5), as the pawl, which is mounted so as to be rotatable via a pin (19).

13. Bicycle or pedelec (2) having a bottom-bracket transmission (1) according to one of Claims 1 to 12.

## Revendications

1. Boîte de vitesses de pédalier (1) avec au moins un ensemble destiné à actionner un élément de changement de vitesse de la boîte de vitesses de pédalier (1) comportant une bague de changement de vitesse, comprenant un carter de boîte de vitesses de pédalier (3) et la bague de changement de vitesse associée à un composant de la boîte de vitesses et montée rotative dans le carter de boîte de vitesses de pédalier (3), dans laquelle un cliquet de changement de vitesse est associé à la bague de changement de vitesse pour bloquer ou libérer la bague de changement de vitesse afin de changer un rapport de transmission, et, en raison des forces de réaction (16) agissant lors du blocage de la bague de changement de vitesse, une zone d'appui renforçant mécaniquement le carter de boîte de vitesses de pédalier (3) est prévue au moins le long d'une zone de contact (14) entre une paroi intérieure (8) du carter de boîte de vitesses de pédalier (3) et une périphérie extérieure de la bague de changement de vitesse pour reprendre les forces de réaction (16) côté carter, **caractérisée en ce qu'**un revêtement augmentant la dureté de surface, prévu sur la paroi intérieure (8) du carter de boîte de vitesses de pédalier (3), est prévu en tant que zone d'appui.

2. Boîte de vitesses de pédalier (1) avec au moins un ensemble destiné à actionner un élément de changement de vitesse de la boîte de vitesses de pédalier (1) comportant une bague de changement de vitesse, comprenant un carter de boîte de vitesses de pédalier (3) et la bague de changement de vitesse associée à un composant de la boîte de vitesses et montée rotative dans le carter de boîte de vitesses de pédalier (3), dans laquelle un cliquet de changement de vitesse est associé à la bague de changement de vitesse pour bloquer ou libérer la bague de changement de vitesse afin de changer un rapport de transmission, et, en raison des forces de réaction (16) agissant lors du blocage de la bague de changement de vitesse, une zone d'appui renforçant mécaniquement le carter de boîte de vitesses de pédalier (3) est prévue au moins le long d'une zone de contact (14) entre une paroi intérieure (8) du carter de boîte de vitesses de pédalier (3) et une périphérie extérieure de la bague de changement de vitesse pour reprendre les forces de réaction (16) côté carter, **caractérisée en ce qu'**une douille (18) fermée sur toute sa circonférence est prévue en tant que zone d'appui, laquelle est fixée à la paroi intérieure (8) du carter de boîte de vitesses de pédalier (3).

3. Boîte de vitesses de pédalier (1) selon la revendication 2, **caractérisée en ce que** la douille (18) est emmanchée à force ou insérée thermiquement dans le carter de boîte de vitesses de pédalier (3).

4. Boîte de vitesses de pédalier (1) avec au moins un ensemble destiné à actionner un élément de changement de vitesse de la boîte de vitesses de pédalier (1) comportant une bague de changement de vitesse, comprenant un carter de boîte de vitesses de pédalier (3) et la bague de changement de vitesse associée à un composant de la boîte de vitesses et montée rotative dans le carter de boîte de vitesses de pédalier (3), dans laquelle un cliquet de changement de vitesse est associé à la bague de changement de vitesse pour bloquer ou libérer la bague de changement de vitesse afin de changer un rapport de transmission, et, en raison des forces de réaction (16) agissant lors du blocage de la bague de changement de vitesse, une zone d'appui renforçant mécaniquement le carter de boîte de vitesses de pédalier (3) est prévue au moins le long d'une zone de contact (14) entre une paroi intérieure (8) du carter de boîte de vitesses de pédalier (3) et une périphérie extérieure de la bague de changement de vitesse pour reprendre les forces de réaction (16) du côté du carter, **caractérisée en ce qu'**un élément d'insertion (9) en forme de segment annulaire est prévu en tant que zone d'appui.

5. Boîte de vitesses de pédalier (1) selon la revendication 4, **caractérisée en ce que** l'élément d'insertion (9) est réalisé en acier à ressort trempé.

6. Boîte de vitesses de pédalier (1) selon l'une des revendications 2 à 5, **caractérisée en ce qu'**une zone d'amortissement acoustique est prévue entre la douille (18) ou l'élément d'insertion (9), respectivement, et la paroi intérieure (8) du carter de boîte de vitesses de pédalier (3).

7. Boîte de vitesses de pédalier (1) selon la revendication 6, **caractérisée en ce que** la zone d'amortissement entre la douille (18) ou l'élément d'insertion (9), respectivement, et la paroi intérieure (8) du carter de boîte de vitesses de pédalier (3) est réalisée sous la forme d'un élastomère vulcanisé directement sur l'élément d'appui (1) ou sur l'élément d'insertion (9), respectivement.

8. Boîte de vitesses de pédalier (1) selon l'une des revendications 2 à 7, **caractérisée en ce que** l'axe central théorique du contour intérieur de la douille (18) ou de l'élément d'insertion (9), respectivement, est coaxial à la bague de changement de vitesse ou décentré par rapport à celle-ci d'une distance correspondant au jeu moyen entre la bague de changement de vitesse et la paroi intérieure (8) du carter de boîte de vitesses de pédalier (3).

9. Boîte de vitesses de pédalier (1) selon l'une des revendications 4 à 8, **caractérisée en ce que** les dimensions de l'élément d'insertion (9) en forme de segment annulaire sont choisies de manière à couvrir au moins la zone de contact (14) entre la denture extérieure (6) de la bague de changement de vitesse et la paroi intérieure (8) du carter de boîte de vitesses de pédalier (3), située à une distance angulaire d'environ 90° d'une zone de contact (15) entre le cliquet de changement de vitesse engagé et la denture extérieure (6) de la bague de changement de vitesse.

10. Boîte de vitesses de pédalier (1) selon la revendication 9, **caractérisée en ce que** des sections d'extrémité (10, 11) de l'élément d'insertion (9) en forme de segment annulaire sont coudées et peuvent être fixées dans des rainures de retenue (12, 13) correspondantes sur la paroi intérieure (8) du carter de boîte de vitesses de pédalier (3).

11. Boîte de vitesses de pédalier (1) selon la revendication 10, **caractérisée en ce que** les rainures de retenue (12, 13) et les sections d'extrémité (10, 11) de l'élément d'insertion (9) sont réalisées selon un angle de coin prédéterminé (Φ) par rapport au rayon intérieur de la paroi intérieure (8) du carter de boîte de vitesses de pédalier (3).

12. Boîte de vitesses de pédalier (1) selon l'une des revendications précédentes, **caractérisée en ce qu'**un élément de changement de vitesse par freinage comportant une bague de freinage (4) montée rotative en tant que bague de changement de vitesse est prévu en tant qu'élément de changement de vitesse, ladite bague de freinage pouvant être bloquée dans un sens de rotation au moyen d'un cliquet de freinage (5) monté rotatif sur un axe (19) en tant que cliquet de changement de vitesse.

13. Bicyclette ou vélo à assistance électrique (2) comprenant une boîte de vitesses de pédalier (1) selon l'une des revendications 1 à 12.
